# EUROPEAN PATENT SPECIFICATION

(11) **EP 1 460 040 B1**
(45) Date of publication and mention of the grant of the patent: **19.09.2007**
(21) Application number: 01995048.4
(22) Date of filing: 28.12.2001
(51) Int. Cl.: C01B 31/06, C04B 35/52, C04B 35/528

(54) **GRAPHITE MATERIAL FOR SYNTHESIZING SEMICONDUCTOR DIAMOND AND SEMICONDUCTOR DIAMOND PRODUCED BY USING THE SAME**
GRAPHITMATERIAL ZUR SYNTHESE VON HALBLEITERDIAMANT UND DANACH HERGESTELLTER HALBLEITERDIAMANT
MATERIAU GRAPHITE PERMETTANT DE SYNTHETISER UN DIAMANT SEMICONDUCTEUR ET DIAMANT SEMICONDUCTEUR PRODUIT AVEC CE MATERIAU

(43) Date of publication of application: 22.09.2004
(73) Proprietor: TOYO TANSO CO., LTD., Osaka-shi, Osaka 555-0011 (JP)
(72) Inventor: FUKUNAGA, Osamu, Ichikawa-shi, Chiba 272-0142 (JP); OKUBO, Hiroshi, c/o Toyo Tanso Co. Ltd., Mitoyo-gun, Kagawa 769-1612 (JP); SOGABE, Toshiaki, c/o Toyo Tanso Co. Ltd., Mitoyo-gun, Kagawa 769-1612 (JP); TOJO, Tetsuro, c/o Toyo Tanso Co. Ltd., Mitoyo-gun, Kagawa 769-1612 (JP)
(74) Representative: TBK-Patent
(86) International application number: PCT/JP2001/011676
(87) International publication number: WO 2003/057625

(56) References cited:
- EP-A- 0 647 590
- EP-A- 0 894 766
- JP-A- 11 207 167
- JP-A- 2001 170 474
- JP-A- 2002 018 267
- US-A- 3 676 069
- US-A- 6 030 595
- US-A1- 2001 001 385
- US-B1- 6 342 195
- PATENT ABSTRACTS OF JAPAN vol. 1995, no. 09, 31 October 1995 (1995-10-31) & JP 07 148426 A (SUMITOMO ELECTRIC IND LTD), 13 June 1995 (1995-06-13)
- PATENT ABSTRACTS OF JAPAN vol. 012, no. 433 (C-543), 15 November 1988 (1988-11-15) & JP 63 158126 A (NATL INST FOR RES IN INORG MATER), 1 July 1988 (1988-07-01)
- SONGSHUN W.: 'The effect of the graphite containing trace boron element on the synthesis of diamond' KEXUE TONGBAO vol. 28, no. 7, July 1983, pages 985 - 988, XP002909403
- MANABU MIYAMOTO ET AL: 'Glassjo tanso kara no harijo diamond gosei' R&D KOBE STEEL ENGINEERING REPORTS vol. 40, no. 4, 01 October 1990, pages 44 - 47, XP002909404

## Description

### Technical Field

The present invention relates to a graphite material used for synthesizing a semiconductor diamond containing a large amount of boron by high pressure synthesis, and a semiconductor diamond produced by using the graphite material.

### Background Art

Currently, high pressure synthesis is widely adopted for producing industrial diamonds. It is known that an industrial diamond containing boron can be synthesized by adding boron into a catalytic metal or the like when the diamond is produced by high pressure synthesis. It is also known that a boron atom substitutes for a carbon atom to make an acceptor level in the upper part of a valence band, i.e., at 0.37 eV, and thereby make a p-type semiconductor.

Recently found is possibility of application to various electrodes, chemical resistance sensors, conductive grinding stones, etc., by utilizing semiconductor characteristics of diamonds containing boron. Thus, a large quantity of semiconductor diamonds containing boron have been requested. For this reason, it is required to synthesize semiconductor diamonds containing boron with high efficiency and at a high yield.

In a conventional high pressure synthesis method, for example, in a method disclosed in Japanese Patent Publication No. 59-6808, boron is added together with aluminum into a metal that acts as a catalyst during the synthesis of a diamond. The metal is thereby used as molten metal and molten catalyst to make a diamond single crystal grow on a diamond seed crystal. The quantity of boron to be added in the catalyst is controlled to control the boron content in the synthesized diamond.

In this method, however, it was difficult to control the quantity of boron to be added in the molten metal and molten catalyst such that boron is contained at a high percentage. In addition, it was difficult to uniformly distribute boron in the diamond. Further, it was also difficult to obtain diamonds at a high yield.

US 2001/001385 and EP-A-0 894 766 describe boron-doped diamonds to be employed as a semiconductor device, which have been prepared by heating a carbon source obtained by adding boron of 1000 ppm, 3000 ppm, 1%, 3% and 10%, respectively, to a flake-like pyrolytic carbon. Furthermore, a similar process for obtaining boron-containing diamonds by mixing some boron into the graphite material from which diamonds are synthesized, is described by Wang Songshun in Kexue Tongbao, volume 28, no. 7, July 1983, pages 985-988.

The following documents describe the synthesis of synthetic diamonds having reduced impurities, crystal defects, strain, and having a high crystallinity, in which the boron content of the graphite material has been adjusted to be as low as possible: JP-A-07148426, EP-A-0647590, US-A-6030595, JP-A-2001-170474.

Thus, an object of the present invention is to provide a graphite material for synthesizing a semiconductor diamond, which material makes it possible to produce at a high yield semiconductor diamonds containing boron or a boron compound at a high percentage and having uniform distribution of the boron or boron compound, and to provide a semiconductor diamond produced by using the graphite material.

### Disclosure of the Invention

To solve the above problem, the present inventors have found the fact that the conversion rate of a graphite material as a raw material into a diamond can be remarkably improved by uniformly adding boron or a boron compound in the graphite material to be converted into a semiconductor diamond, and compacting and purifying the graphite material to reduce its hydrogen content when a semiconductor diamond containing boron is produced by high pressure synthesis, thereby completing the present invention.

That is, a graphite material of the present invention for synthesizing a semiconductor diamond is characterized in that the graphite material contains boron or a boron compound, wherein the content of boron elements in the graphite material is 0.1 to 15 mass%, preferably, 0.5 to 10 mass%, and wherein the graphite material is obtainable by the process as defined in claim 1. The bulk density of the graphite material is preferably not less than 1.6 g/cm³, more preferably, not less than 1.7 g/cm³. The hydrogen content in the purified graphite material is preferably not more than 1000 ppm, more preferably, not more than 500 ppm, still more preferably, not more than 50 ppm.

### Brief Description of Drawings

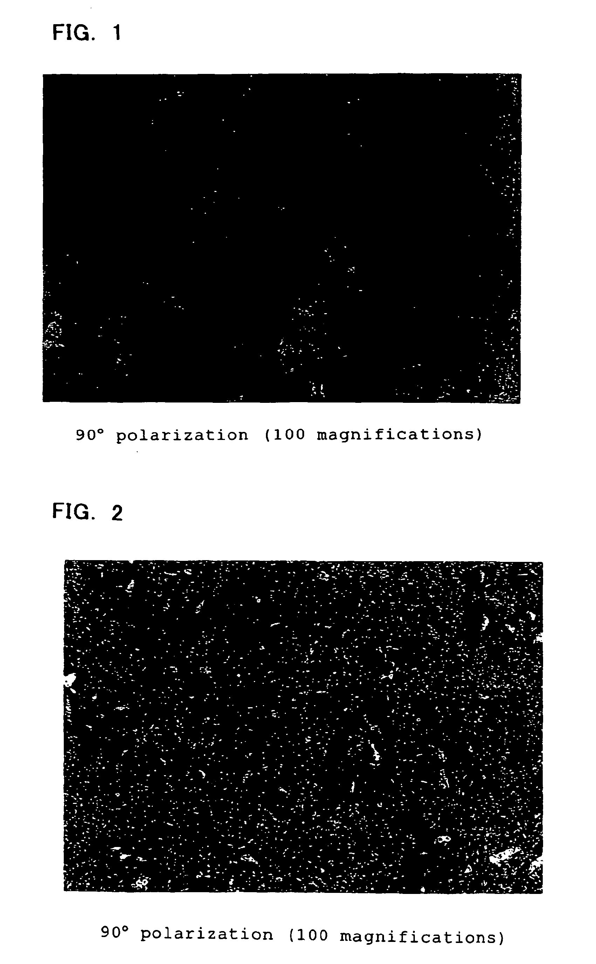

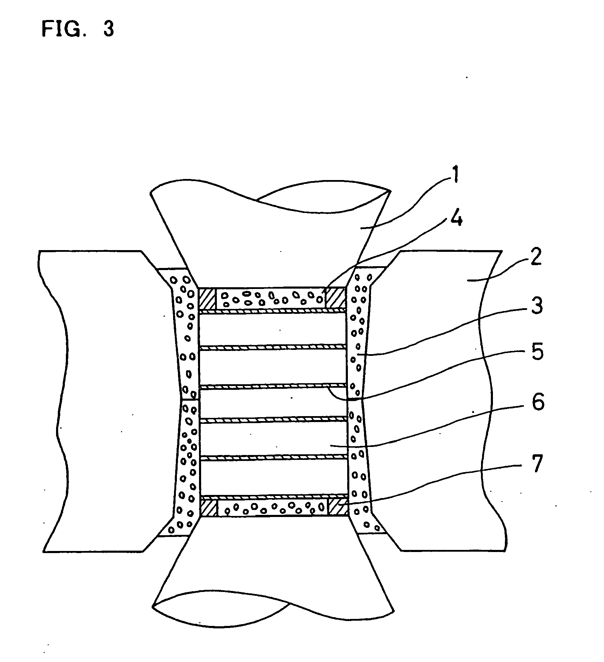

FIG. 1 is a polarization microscope photograph of a graphite material of Example 1. FIG. 2 is a polarization microscope photograph of a graphite material of Example 2. FIG. 3 is a sectional view of a sample cell used in a belt type super high pressure apparatus for synthesizing a diamond by using a graphite material according to the present invention.

### Best Form for Carrying Out the Invention

A graphite material of the present invention for synthesizing a semiconductor material is obtained by the manner that boron powder or boron carbide powder, artificial graphite powder, and soft carbon powder are used as raw materials and these raw materials are blended, formed, baked, graphitized, and purified by arbitrary methods.

The boron powder or boron carbide powder is not particularly limited and generally commercialized one can be used. In particular, its mean particle diameter is preferably not more than 50 micrometer. If the mean particle diameter exceeds 50 micrometer, the boron ingredient may be biased in the graphite material after being baked and graphitized.

As the soft carbon powder usable are petroleum coke, pitch coke, coal coke, etc. Of them, mesophase spherules, which are produced by thermal treatment of pitches, are preferable because they have self-sinterability and can be baked without using a binder or the like. The mean particle diameter of the soft carbon powder is preferably not more than 50 micrometer. By regulating the mean particle diameter to not more than 50 micrometer, the above-described boron or boron carbide powder can be uniformly mixed without being biased.

Also, the mean particle diameter of the artificial graphite powder is preferably not more than 50 micrometer, like those of the boron powder or boron carbide powder and the soft carbon powder. By regulating the mean particle diameters of the raw materials to substantially the same degree, the respective raw materials can be uniformly mixed without being biased.

Next, 0.1 to 15 mass%, preferably, 0.2 to 10 mass% of the boron powder or boron carbide powder, 76 to 98.9 mass%, preferably, 81 to 98.8 mass% of the soft carbon powder, and 1 to 9 mass% of the artificial graphite powder are blended for one to two hours by an arbitrary method, and then they are formed by an arbitrary forming method such as cold isostatic pressing into arbitrary shape and size. Afterward, they are baked under a non-oxidizing atmosphere at a temperature of 600 to 1300 degrees C (primary baking). After the primary baking, they are baked in an inert gas atmosphere at a temperature of 1800 to 2200 degrees C, preferably, at 2000 degrees C (secondary baking). Next, thermal treatment at a temperature of 2400 to 2600 degrees C is performed under a non-oxidizing atmosphere to enhance the degree of graphitization and sublimate impurities. A purified graphite material is thus obtained. Its hydrogen content thereby can be not more than 1000 ppm. In addition, by enhancing the degree of graphitization, the conversion rate into a diamond can be further improved.

Further, by thus baking at 2000 degrees C, the boron ingredients can be very uniformly dispersed with almost suppressing evaporation loss of the boron ingredients, and a graphite material containing boron can be obtained in which important physical properties, such as machinability, thermal conductivity, and coefficient of thermal expansion, have been improved. Although the reason is not clear at present, it is supposed that liberation of boron ingredients, conversion into carbon portion, diffusion, recombination, etc., are repeated and the boron ingredients are very uniformly dispersed almost without loss of the boron ingredients by heating in excess of the temperature limit for stable existence of boron, and the graphitization reaction of carbon portion is progressed by high temperature baking. In addition, it is thinkable that such high temperature baking causes a change into a boron-containing graphite material just as a pure graphite material that is a solid solution in which boron is uniformly dispersed in the whole and an aggregate of graphite crystals partially replaced by boron.

By such a treatment, the bulk density is not less than 1.6 g/cm³, preferably, not less than 1.7 g/cm³, and a graphite material in which boron is uniformly dispersed can be obtained. In addition, the content of boron elements in the graphite material can be 0.1 to 15 mass%, preferably, 0.2 to 10 mass%. If the bulk density is less than 1.6 g/cm³, it is undesirable because the conversion rate into a diamond becomes bad. The content of boron elements in the graphite material can be controlled to the range of 0.1 to 15 mass%, preferably, 0.2 to 10 mass% by controlling the quantity of the boron or boron carbide powder to be added as a raw material. If the content of boron elements is less than 0.1 mass%, the diamond converted from the graphite may not exhibit noticeable semiconductor characteristics. On the other hand, if the content exceeds 15 mass%, boron carbide may deposit and there may be a case undesirable on application.

Further, purifying can be performed in order to reduce impurity contents such as hydrogen in the graphite material. By this, the yield of diamond is more improved. If the graphite material contains impurities such as moisture, hydrogen, oxygen, and sulfur, in particular, if the graphite material contains even a little hydrogen, the yield of conversion of the graphite material into diamond is extremely reduced. For this reason, the graphite material having been graphitized at the above-described high temperature is thermally treated under a pressure of not more than 0.1 Pa, preferably, not more than 0.01 Pa, at a temperature of not less than 1800 degrees C for not less than two hours. By this treatment, the impurities such as moisture, hydrogen, oxygen, and sulfur in the graphite material, in particular, hydrogen is more reduced, the hydrogen content can be 1000 ppm, preferably, 500 ppm, more preferably 50 ppm. The hydrogen content was measured with a carbon/hydrogen/moisture analyzer (RH-IE type made by LECO Corporation).

Through the above-described process, when a diamond is produced by high pressure synthesis, a graphite material can be obtained that is higher than that of a prior art in the conversion rate into a semiconductor diamond containing boron. By using the graphite material thus obtained, a semiconductor diamond can be industrially produced, and application to various electrodes, chemical resistance sensors, conductive grinding stones, etc., also becomes possible.

Hereinafter, the present invention will be described more specifically with reference to examples.

### (Example 1)

Raw materials were prepared in the ratio of 15 mass% of boron carbide powder of its mean particle diameter of 13 micrometer: 80 mass% of mesophase spherules of its mean particle diameter of 11 micrometer: 5 mass% of artificial graphite powder of its mean particle diameter of 4 micrometer. They were dry blended for one hour at the ordinary temperature and then formed under a pressure of 80 MPa by cold isostatic pressing to obtain a molded component of 120 x 520 x 720 mm. The molded component was packed in coke powder and the temperature was raised to 1000 degrees C under a non-oxidizing atmosphere to obtain a primary-sintered sample. This primary-sintered sample was buried in coke powder within a resistance heating furnace and thermally treated at 2000 degrees C in an inert gas atmosphere. Further, it was thermally treated at 2400 degrees C in an Acheson furnace to improve the degree of graphitization and uniformize the dispersion of boron in the graphite material. This graphite material had its bulk density of 1.8 g/cm³, its Shore hardness of 12, its resistivity of 9 microohm meter, its bending strength of 60 MPa, its compressive strength of 65 MPa, its elastic modulus of 3 GPa, its boron element content of 10 mass%, its thermal expansion coefficient of 2 x 10⁻⁶/degree C, its thermal conductivity of 40 W/(meter degree C), and its hydrogen content of 300 ppm.

### (Example 2, Reference Example)

A graphite material was made in the same manner as in Example 1 though the thermal treatment at 2400 degrees C in the Acheson furnace was not performed. This graphite material had its bulk density of 1.8 g/cm³, its Shore hardness of 70, its resistivity of 15 microohm meter, its bending strength of 60 MPa, its compressive strength of 140 MPa, its elastic modulus of 22 GPa, its boron element content of 10 mass%, its thermal expansion coefficient of 5 x 10⁻⁶/degree C, its thermal conductivity of 30 W/(meter degree C), and its hydrogen content of not less than 1000 ppm.

### (Reference Example 3)

The graphite material of Reference Example 2 was thermally treated at 2150 degrees C under a pressure of 1.5 x 10⁻³ Pa. This graphite material had its bulk density of 1.8 g/cm³, its Shore hardness of 70, its resistivity of 11 microohm meter, its bending strength of 70 MPa, its compressive strength of 150 MPa, its elastic modulus of 20 GPa, its boron element content of 10 mass%, its thermal expansion coefficient of 5 x 10⁻⁶/degree C, its thermal conductivity of 35 W/(meter degree C), and its hydrogen content of about 150 ppm.

FIGS. 1 and 2 show polarization microscope photographs of the graphite materials of Examples 1 and 2, respectively. From these FIGS. 1 and 2, it is confirmed that the graphite material of Example 1 is higher in the degree of graphitization than the graphite material of Example 2.

Next, the respective graphite materials of Examples 1 to 3 were processed into phi 15 mm x 3 mm and then converted into diamonds using a belt type super high pressure apparatus. FIG. 3 shows a sectional view of a sample cell used in the belt type super high pressure apparatus. In FIG. 3, reference numeral 1 denotes an anvil; reference numeral 2 denotes a cylinder; reference numeral 3 denotes a pyroferrite gasket; reference numeral 4 denotes an isolating plate of a molded component made of salt in which 10% of zirconia powder has been mixed; reference numeral 5 denotes a catalytic metal plate; reference numeral 6 denotes a graphite material according to the present invention; and reference numeral 7 denotes a graphite ring to be electrified to function as a heater. To synthesize a diamond, as shown in FIG. 3, the graphite material 6 and the catalytic metal plate 5 were alternately put in layers in a not-shown tube of the same material as the isolating plate 4. The rings 7 disposed in the upper and lower portions of the tube were electrified and a temperature of 1400 degrees C and a pressure of about 5.5 GPa were kept for 30 minutes. Afterward, the electrification to the rings 7 was reduced to cool to the room temperature and then the pressure was gradually lowered and a sample was taken out. After the sample was treated with hydrochloric acid and nitric acid, a diamond was obtained. The obtained diamond contained boron and exhibited semiconductor characteristics.

In case of using the graphite material of Example 1, the mean particle diameter of the obtained diamond was 25 micrometer and the conversion yield from the graphite material 6 into the diamond was 97%. In case of using the graphite material of Example 2, the mean particle diameter of the obtained diamond was 25 micrometer and the conversion yield into the diamond was not more than 17%. In case of using the graphite material of Example 3, the mean particle diameter of the obtained diamond was 20 micrometer and the conversion yield into the diamond was not less than 99%. Here, the conversion yield was calculated from the measured weights of the filled graphite raw material and the synthesized diamond.

As described above, by enhancing the degree of graphitization of the graphite material and reducing the hydrogen content in the graphite, the yield of diamond can be remarkably improved to a sufficient degree for industrial production of diamonds.

### Industrial Applicability

The conversion rate of a graphite material as a raw material into a diamond can be remarkably improved by uniformly adding boron or a boron compound in the graphite material to be converted into a semiconductor diamond, and compacting and purifying the graphite material to reduce its hydrogen content. This makes it possible to industrially produce semiconductor diamonds, and application to various electrodes, chemical resistance sensors, conductive grinding stones, etc., also becomes possible.

## Claims

1. A graphite material used for producing a semiconductor diamond by high pressure synthesis, said graphite material containing boron or a boron compound in a boron element content of said graphite material of 0.1 to 15 mass%, wherein the graphite material is obtainable by
(i) blending a soft carbon powder with boron powder or a boron carbide powder and artificial graphite powder,
(ii) baking said powder blend at a temperature of 600 to 1300°C under a non-oxidizing atmosphere,
(iii) baking at a temperature of 1800 to 2200°C under inert atmosphere, and
(iv) thermal treating at a temperature of 2400 to 2600°C under a non-oxidizing atmosphere.

2. The graphite material according to claim 1, wherein the bulk density of said graphite material is not less than 1.6 g/cm³.

3. The graphite material according to claim 1, wherein the hydrogen content of said graphite material is not more than 1000 ppm.

4. A semiconductor diamond produced by using the graphite material according to any of claims 1 to 3.

## Patentansprüche

1. Graphitmaterial, verwendet zur Herstellung eines Halbleiterdiamanten durch Hochdrucksynthese, wobei das Graphitmaterial Bor oder eine Borverbindung in einem Gehalt an elementarem Bor des Graphitmaterials von 0,1 bis 15 Masse-% enthält, wobei das Graphitmaterial erhältlich ist durch
(i) Mischen eines weichen Kohlenstoffpulvers mit Borpulver oder einem Borcarbidpulver und künstlichem Graphitpulver,
(ii) Brennen der Pulvermischung bei einer Temperatur von 600 bis 1300°C in einer nicht-oxidierenden Atmosphäre,
(iii) Brennen bei einer Temperatur von 1800 bis 2200°C in einer inerten Atmosphäre, und
(iv) Wärmebehandeln bei einer Temperatur von 2400 bis 2600°C in einer nicht-oxidierenden Atmosphäre.

2. Graphitmaterial nach Anspruch 1, wobei die Schüttdichte des Graphitmaterials nicht geringer als 1,6 g/cm³ ist.

3. Graphitmaterial nach Anspruch 1, wobei der Wasserstoffgehalt des Graphitmaterials nicht höher als 1000 ppm ist.

4. Halbleiterdiamant, hergestellt durch Verwenden des Graphitmaterials nach einem der Ansprüche 1 bis 3.

## Revendications

1. Matériau en graphite utilisé pour produire un diamant semi-conducteur par une synthèse sous pression élevée, ledit matériau en graphite contenant du bore ou un composé de bore en une teneur en élément de bore dudit matériau en graphite allant de 0,1 à 15 % en masse, dans lequel le matériau en graphite peut être obtenu en :
(i) mélangeant une poudre de carbone souple avec une poudre de bore ou une poudre de carbure de bore et une poudre de graphite artificiel,
(ii) cuisant ledit mélange en poudre à une température allant de 600 à 1 300 °C sous une atmosphère non oxydante,
(iii) cuisant à une température allant de 1 800 à 2 200°C sous une atmosphère inerte, et
(iv) traitant à chaud à une température allant de 2 400 à 2 600 °C sous une atmosphère non oxydante.

2. Matériau en graphite selon la revendication 1, dans lequel la masse volumique apparente dudit matériau en graphite n'est pas inférieure à 1,6 g/cm³.

3. Matériau en graphite selon la revendication 1, dans lequel la teneur en hydrogène dudit matériau en graphite n'est pas supérieure à 1 000 p.p.m.

4. Diamant semi-conducteur produit en utilisant le matériau en graphite selon l'une quelconque des revendications 1 à 3.
